# EUROPEAN PATENT SPECIFICATION

(11) **EP 3 889 004 B1**
(45) Date of publication and mention of the grant of the patent: **12.10.2022**
(21) Application number: 19889754.8
(22) Date of filing: 22.11.2019
(51) Int. Cl.: B62D 6/00, B62D 5/04

(54) **AUXILIARY CONTROL SYSTEM AND METHOD FOR A VEHICLE**
HILFSSTEUERUNGSSYSTEM UND -VERFAHREN FÜR EIN FAHRZEUG
SYSTÈME ET PROCÉDÉ DE COMMANDE AUXILIAIRE POUR UN VÉHICULE

(30) Priority: 26.11.2018 CN 201811416723
(43) Date of publication of application: 06.10.2021
(73) Proprietor: Great Wall Motor Company Limited, Baoding, Hebei 071000 (CN)
(72) Inventor: NIU, Xiaofeng, Baoding, Hebei 071000 (CN); KONG, Fanmao, Baoding, Hebei 071000 (CN); SUN, Yu, Baoding, Hebei 071000 (CN); WANG, Binbin, Baoding, Hebei 071000 (CN); ZHANG, Huijun, Baoding, Hebei 071000 (CN); ZHOU, Wenguo, Baoding, Hebei 071000 (CN)
(74) Representative: Klunker IP Patentanwälte PartG mbB
(86) International application number: PCT/CN2019/120308
(87) International publication number: WO 2020/108406

(56) References cited:
- KR-A- 20120 029 219
- US-A1- 2005 049 769
- US-A1- 2009 271 074
- US-A1- 2016 272 197

## Description

### Technical Field

The invention relates to the field of vehicles, and more particularly, to an auxiliary control system and method for vehicles.

### Background

The Electronic Stability Program (ESP) system is able to quickly intervene in the operation of the engines and braking systems in emergency situation where the vehicle is about to be out of control, so that the vehicle can be kept stabilized quickly to ensure the safety of the driver and the vehicle.

The ESP system mainly consists of three control modules: Antilock Brake System (ABS) module, Traction Control System (TCS) module and Vehicle Dynamic Control (VDC) module.

However, in interactive systems among different Electronic Control Units (ECU) on the vehicle, the ESP system seldom interacts with other systems and usually act as a subsystem, for example the ESP system applies emergency brake for Adaptive Cruise Control system(ACC), and identifies wheel rotating direction and wheel speed for Auto Parking Assistance System

US 2009/0271074 A1, on which the preambles of claims 1 and 7 are based, describes a yaw stability control system for a vehicle using a steering system and a method of controlling by detecting the occurrence of understeer, determining the degree of understeer, determining if the determined degree of understeer exceeds a threshold value, saving the steering wheel torque value and steering wheel angle value when determined that a calculated drop in steering wheel torque exceeds the threshold value, calculating a guidance torque, a driver-intended steering wheel angle, and updating the steering wheel angle at the start of the guidance torque calculation, applying the guidance torque to the steering of the vehicle, and using the driver-intended steering wheel angle for yaw stability control. KR 2012 0029219 A discloses a device and a method for controlling electronic stability control and motor driven power steering that aim to improve handling performance by directly changing the motor driven power steering control characteristic according to a slip angle. The device detects the motor torque and the steering torque from a torque sensor. A vehicle speed sensor detects the vehicle speed. In case of controlling handling, an electronic stability control operation rate is received and an assist rate is controlled based on the received motor torque, steering torque, vehicle speed, and electronic stability control operation rate. According to the controlled assist rate, a current is outputted to a motor and a handling function is implemented in the motor driven power steering. Information about the detected motor torque and steering torque may be delivered to the electronic stability control. The MDPS may receive and implement a superimposed torque command.

### Summary

The embodiment of the invention aims to provide an auxiliary control system and method for vehicles, used for at least improving the control strategy of the ESP system.

In order to achieve the aforementioned purposes, the embodiment of the invention aims to provide an auxiliary control system and method for vehicles. The system comprises a Dynamic Stability Assistant (DSA) module and an Electric Power Steering (EPS) module, wherein, the DSA module is used for performing the following steps: detecting whether the vehicle is in a special working condition; calculating the assist steering torque for the current working condition of the vehicle if the vehicle is in a special working condition; generating a torque overlay request comprising the assist steering torque; and sending the torque overlay request to the EPS module; and the EPS module is used for regulating the steering wheel torque according to the assist steering torque in the torque overlay request.

Optionally, the DSA module is used for periodically performing the steps; and/or the special working conditions include one or more of the following items: oversteer, understeer, braking on split-mu surface, accelerating on split-mu surface, and cornering with the lateral acceleration which is higher than a predetermined acceleration.

According to the invention, the EPS module regulates the steering wheel torque according to the assist steering torque and the gradient of the assist steering torque.

Optionally, the EPS module is used for: under the condition that the number of accumulated anomalies of the assist steering torque and/or the gradient of the assist steering torque is smaller than the predetermined number, performing the following steps: superimposing the assist steering torque on the steering wheel torque if the assist steering torque and the gradient are normal; calculating the current torque to be superimposed according to the preset gradient value and the latest superimposed torque if the assist steering torque is normal and the gradient is abnormal; and superimposing the preset torque on the steering wheel torque if the assist steering torque is abnormal, but the gradient is normal or abnormal, wherein the superposition direction of the preset torque is the same as that of the assist steering torque; under the condition that the assist steering torque is in the preset torque range, it is determined that the assist steering torque is normal; under the condition that the gradient does not exceed the preset gradient value, it is determined that the gradient is normal; under the condition that the number of accumulated anomalies of the assist steering torque and/or the gradient of the assist steering torque is smaller than the predetermined number, the steering wheel torque does not need to be superimposed.

Optionally, the EPS module calculates the number of accumulated anomalies according to the following steps: if the assist steering torque is abnormal and/or the gradient of the assist steering torque is abnormal, the number of accumulated anomalies is increased by the predetermined value; if the assist steering torque and the gradient of the assist steering torque are both normal, the number of accumulated anomalies is decreased by the predetermined value; wherein, when the assist steering torque and/or the gradient of the assist steering torque shows abnormality for the first time, the number of accumulated anomalies will start to be counted.

Optionally, in one or more of the followings: under the condition that the number of accumulated anomalies of the assist steering torque and/or the gradient of the assist steering torque is smaller than the predetermined number, the EPS module is kept in the active state, or the EPS module is transferred to the active state from the ready-for-control state; under the condition that the number of accumulated anomalies of the assist steering torque and/or the gradient of the assist steering torque is equal to the predetermined number, the EPS module is transferred to the permanent failure state from the active state; and the preset toque is the maximum or the minimum value of the preset torque range.

Optionally, the EPS module is further used for outputting its current state to the DSA module, and the DSA module is used for sending the torque overlay request to the EPS module under the condition that the EPS module is in either the active state or ready-for-control state.

Correspondingly, the embodiment of the invention further provides an auxiliary control method for vehicles. The method comprises: the DSA module performs the following steps: detecting whether the vehicle is in a special working condition; calculating the assist steering torque for the current working condition of the vehicle if the vehicle is in a special working condition; generating a torque overlay request comprising the assist steering torque; and sending the torque overlay request to the EPS module; and the EPS module regulates the steering wheel torque according to the assist steering torque based on the torque overlay request.

Optionally, the DSA module is used for periodically performing the steps; and/or the special working conditions include one or more of the following items: oversteer, understeer, braking on split-mu surface, accelerating on split-mu surface, cornering with the lateral acceleration which is higher than the predetermined acceleration.

According to the invention, the EPS module regulates the steering wheel torque according to the assist steering torque and the gradient of the assist steering torque.

Optionally, under the condition that the number of accumulated anomalies of the assist steering torque and/or the gradient of the assist steering torque is smaller than the predetermined number, the EPS module performs the following steps: superimposing the assist steering torque on the steering wheel torque if the assist steering torque and the gradient are normal; calculating the current torque to be superimposed according to the preset gradient value and the latest superimposed torque if the assist steering torque is normal and the gradient is abnormal; and superimposing the preset torque on the steering wheel torque if the assist steering torque is abnormal while the gradient is normal or abnormal, wherein the superposition direction of the preset torque is the same as that of the assist steering torque; under the condition that the assist steering torque is in the preset torque range, it is determined that the assist steering torque is normal; under the condition that the gradient does not exceed the preset gradient value, it is determined that the gradient is normal; under the condition that the number of accumulated anomalies of the assist steering torque and/or the gradient of the assist steering torque is smaller than the predetermined number, the EPS module will not superimpose the steering wheel torque.

Optionally, the EPS module calculates the number of accumulated anomalies: if the assist steering torque and/or the gradient of the assist steering torque is abnormal, the number of accumulated anomalies is increased by the predetermined value; if the assist steering torque and the gradient of the assist steering torque are both normal, the number of accumulated anomalies is decreased by the predetermined value; wherein, when the assist steering torque and/or the gradient of the assist steering torque shows abnormality for the first time, the number of accumulated anomalies start to be counted.

Optionally, in one or more of the followings: under the condition that the number of accumulated anomalies of the assist steering torque and/or the gradient of the assist steering torque is smaller than the predetermined number, the EPS module is kept in the active state, or the EPS module is transferred to the active state from the ready-for-control state; under the condition that the number of accumulated anomalies of the assist steering torque and/or the gradient of the assist steering torque is equal to the predetermined number, the EPS module is transferred to the permanent failure state from the active state; and the preset toque is the maximum or the minimum value of the preset torque range.

Optionally, the method further comprises the following steps: the EPS module outputs its current state to the DSA module; and the DSA module sends the torque overlay request to the EPS module under the condition that the EPS module is in the active state or ready-for-control state.

Through the aforementioned technical solution, the DSA module calculates the assist steering torque for the special working condition where the vehicle is detected to be under; the ESP module assists the driver in operating the vehicle through the assist steering torque and correcting the dynamic change of the vehicle, so that the vehicle can always be in a stable and controllable state; therefore, the vehicle safety and the ride comfort are improved.

Other characteristics and advantages of the embodiment of the invention will be described in the Detailed Description of the Preferred Embodiments in detail.

### Brief Description of the Figures

The figures provide more details about the embodiments of the invention, and form a part of the description. Such figures, together with the Detailed Description of the Preferred Embodiments below, are used for explaining the embodiments of the invention, but do not constitute the limitation to the embodiments of the invention. In those figures:
FIG.1 shows a structural block diagram of the auxiliary control system for vehicles according to the embodiment of the invention;
FIG.2 shows a state transition diagram of the EPS module in the embodiment; and
FIG.3 shows a process diagram of the auxiliary control method for vehicles according to the embodiment of the invention.

Definitions of the markings in figures

| | | | |
|---|---|---|---|
| 110 | DSA module | 120 | EPS module |

### Detailed Description of the Preferred Embodiments

The detailed description of the embodiments of the present invention is given below in combination with the figures. It should be understood that the detailed description explained here is used for describing and explaining the embodiments of the invention only, not for limiting the embodiments of the invention.

When the vehicle runs on a split-mu surface (that is, the left wheels of the vehicle run on a low-mu section while the right wheels run on a high-mu section, or the right wheels run on the low-mu section while the left wheels run on the high-mu section), since the adhesion coefficients of the right and left wheels of the vehicle on the roads are inconsistent, the following two conditions may occur when the vehicle is braked or accelerated on such special roads:
(1) In case of braking on the split-mu surface, the brake pressure generated on the high-mu section is higher than that generated on the low-mu section, and consequently the vehicle is subjected to a yaw torque of rotation toward the high-mu section; the yaw torque is increased as the difference in the adhesion coefficients is increased, and the yaw velocity is increased as the braking speed is increased; when the yaw torque and the yaw velocity reach large values, ordinary drivers are hard to control the vehicle steadily;
(2) In case of acceleration on the split-mu surface, the driving force generated on the high-mu section is higher than that generated on the low-mu section, and consequently the vehicle is subjected to the yaw torque of rotation toward the high-mu section and tended to move towards the low-mu section, and the driver needs to correct the steering wheel to ensure that the vehicle runs linearly.

Under the special conditions, the yaw torque of the vehicle can be reduced with pressure of low friction side of a front axle by the ESP system through control over pressurization and pressure reduction of high friction side of the front axle; in addition, the rear axle can be limited to a certain pressure so as to reduce the risk that the vehicle drifts and assist the vehicle in stabilizing. But under the condition of high-speed braking of the vehicle, the driver still needs to make accurate judgment in advance, and correct the steering wheel to control the vehicle in combination with the ESP system; only through cooperation of the ESP system and the driver, the risk that the vehicle gets out of control can be reduced finally.

Based on this, the embodiment of the invention provides an auxiliary control systems and method for vehicles, used for assisting the driver in operating the vehicle and correcting the dynamic change of the vehicle under the special working condition, so that the vehicle can always be in a stable and controllable state; therefore, the vehicle safety is improved.

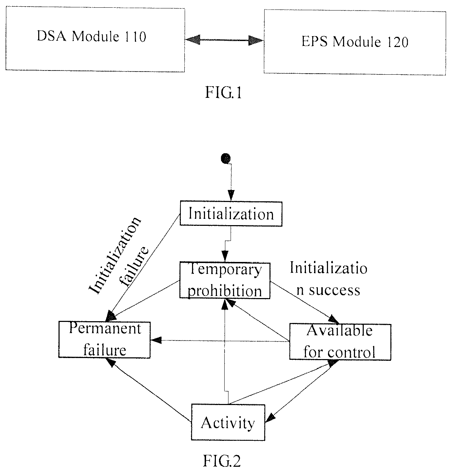

FIG.1 shows a structure diagram of the auxiliary control system for the vehicle according to the embodiment of the invention. As shown in FIG.1, the embodiment of the invention provides an auxiliary control system for vehicles. The system may comprise a Dynamic Stability Assistant (DSA) module 110 and an Electric Power Steering (EPS) module 120.

The DSA module 110 can be an internal module of the vehicle ESP system, and the DSA module 110 can be further developed based on hardware of the ESP system. The logical function of the DSA module 110 may be an additional function designed based on the VDC module, ABS module and TCS module in the ESP system, and it can further improve the control strategy of the ESP system.

In the vehicle running process, the DSA module 110 may detect whether the vehicle is under a special working condition in real time or periodically. The special working conditions comprise one or more of the following items: oversteer, understeer, braking on split-mu surface, accelerating on split-mu surface, and cornering with the lateral acceleration which is higher than the predetermined acceleration.

The DSA module can identify whether the vehicle is under a special working condition according to the vehicle speed, master cylinder braking pressure, target yaw angle and body slip angle calculated by the ESP system and in combination with the VDS control threshold and TCS trigger threshold. The DSA module may calculate the assist steering torque for the current working condition of the vehicle when detecting that the vehicle is under a special working condition. Specifically, the DSA module 110 can receive the lateral acceleration, steering wheel angle, body yaw angle and other parameters sent by a body sensor; the EPS module 120 can send the detected driver-input torque to the DSA module 110; and the DSA module 110 can calculate the assist steering torque on the basis of the lateral acceleration, steering wheel angle, body yaw angle and driver input torque. For example, a database is established according to the three parameters, namely the lateral acceleration, steering wheel angle and body yaw angle, and a dynamic index is evaluated according to the database. The dynamic index may be used for evaluating the current vehicle stability; the larger the dynamic index is, the more unstable the vehicle will be at present, and the larger torque value is required to assist the driver in operating the vehicle. The required steering wheel torques corresponding to the dynamic indexes one by one can be stored in the DSA module 110. The larger the dynamic index is, the larger the required steering wheel torque is. After the required steering wheel torque is determined according to the dynamic index, the assist steering torque for the current working condition of the vehicle can be calculated in combination with the driver input torque. The calculated assist steering torque can comprise "+" and "-", wherein "+" can be set to show the counterclockwise direction, and "-" shows the clockwise direction; for example, the assist steering torque -1NM indicates that the steering wheel is expected to rotate clockwise with 1NM

After the assist steering torque is calculated, the torque overlay request including the assist steering torque is generated. Optionally, the corresponding assist steering torque range can be stored for each special working condition in the DSA module 110, and the torque overlay request is generated under the condition that the calculated assist steering torque is within the corresponding steering torque range. Under the condition that the calculated assist steering torque is beyond the corresponding steering torque range, the torque overlay request is not generated, and the DSA module 110 continues detecting the working condition of the vehicle.

The DSA module 110 may sends the generated torque overlay request to the ESP module 120; for example, the torque overlay request can be sent to the ESP module 120 through a CAN bus. The EPS module 120 may regulate the steering wheel torque according to the assist steering torque included in the torque overlay request. Optionally, the torque overlay request further includes a torque overlay command request flag. The EPS module 120 may regulate the steering wheel torque based on the assist steering torque under the condition that the torque overlay request comprises the torque overlay command request flag and the assist steering torque. The steering wheel torque is regulated based on the assist steering torque to assist the driver in operating the vehicle and correcting the dynamic change of the vehicle, so that the vehicle can always be in a stable and controllable state; therefore, the vehicle safety is improved.

Optionally, the function of the DSA module can be enabled and disabled through a switch; for example, the function of the DSA module can be enabled and disabled by the driver. The switch of the DSA module can be a button arranged on a vehicle operating panel, and the driver can enable and disable the DSA module through the button. Or, an option for enabling and disabling the DSA module can be set on a touch screen of the vehicle host system, so as to facilitate the driver to enable and disable the DSA module.

FIG.2 shows a state transition diagram of the EPS module in the embodiment. As shown in FIG.2, after powering on, the EPS module is firstly initialized; if the initialization is failed, the EPS module will be in the permanent failure state; wherein, under the condition that the EPS module is in the permanent failure state, the EPS module can report an error for anomaly. In the initializing process, the EPS module is in the temporarily prohibited state; if the initialization succeeds, the EPS module turns to the ready-for-control state, and then goes into the active state through effective trigger. The EPS module can be switched to the corresponding state through the switching condition of an internal state machine. The EPS module may transmit its current state to the DSA module; for example, the current state can be represented through "EPS_DSA_ControlSts", and the data transmission between the EPS module and the DSA module is performed through the CAN bus.

Under the condition that the current state of the EPS module is in the ready-for-control state or the active state, the DSA module sends the torque overlay request to the ESP module. "DSA Torque Request" may be used for representing the assist steering torque calculated through the DSA module in the superposition request, and "DSA_Active" is used for representing the torque overlay command request flag. The EPS module will regulate the steering wheel torque according to the received assist steering torque and the gradient of the assist steering torque.

Specifically, the EPS module may regulate the steering wheel torque according to the situation whether the received assist steering torque is normal, the gradient of the assist steering torque is normal, and the number of accumulated anomalies of the gradient of the assist steering torque. Under the condition that the assist steering torque is in the preset torque range, it is determined that the assist steering torque is normal; Under the condition that the assist steering torque is beyond the preset torque range, it is determined that the assist steering torque is abnormal; wherein, the preset torque range can be set to any proper values according to the actual conditions; for example, the preset torque range can be set to -3Nm~+3Nm, wherein the two endpoints -3Nm and +3Nm are included. Under the condition that the gradient does not exceed the preset gradient value, it is determined that the gradient is normal; under the condition that the gradient exceeds the preset gradient value, it is determined that the gradient is abnormal, wherein the preset gradient value can be set to any proper value according to the actual conditions, and the preset gradient value of the different types of vehicle can be different. For example, the preset gradient value can be set to 10Nm/s. The difference between the assist steering torque received currently and the assist steering torque received previously can be obtained by subtracting the assist steering torque received previously from the assist steering torque received currently, and then the difference divided by the time difference between the assist steering torque received currently and the assist steering torque received previously equals to the gradient of the assist steering torque, or the difference between the assist steering torque received currently and the torque superimposed on the steering wheel through the EPS module previously can be obtained by subtracting the torque superimposed on the steering wheel previously from the assist steering torque received currently, and then the difference divided by the time difference between the assist steering torque received currently and the assist steering torque received previously equals to the gradient of the assist steering torque.

The anomaly monitoring and counting function can be enabled through the EPS module for monitoring the number of accumulated anomalies, that is, the EPS module is in the active or ready-for-control state, since the assist steering torque and/or the gradient of the assist steering torque received by the DSA module is abnormal, the number of accumulated anomalies start to be counted.

When the assist steering torque and/or the gradient of the assist steering torque shows abnormality for the first time, the number of accumulated anomalies start to be counted; for example, in case of anomaly for the first time, the number of accumulated anomalies can be recorded and is equal to 1. In the accumulation process, if the assist steering torque is abnormal and/or the gradient of the assist steering torque is abnormal, the number of accumulated anomalies is increased by the predetermined value; if the assist steering torque and the gradient of the assist steering torque are both normal, the number of accumulated anomalies is decreased by the predetermined value. Wherein, the predetermined value can be set to any proper value according to the requirements, and examples are given in the embodiment of the invention by taking the predetermined value as 1.

The following is an illustration for calculation of the number of accumulated anomalies by taking the predetermined value as 1.

When the EPS module monitors and detects that either the assist steering torque or the gradient of the assist steering torque received from the DSA module shows abnormality for the first time, the number of accumulated anomalies start to be counted and at the moment, the number of accumulated anomalies is recorded as 1. The EPS module continuously monitors the assist steering torque and the gradient of the assist steering torque received from the DSA module.

When the EPS module monitors that either the assist steering torque or the gradient of the assist steering torque received from the DSA module shows abnormality once more, the number of accumulated anomalies is recorded as 1+1=2. When either the assist steering torque or the gradient of the assist steering torque shows abnormality for the third time, the number of accumulated anomalies is recorded as 1+1+1=3, and so on; wherein, as long as any one of the assist steering torque and the gradient of the assist steering torque shows abnormality, the number of accumulated anomalies is accounted. When the EPS module monitors that the assist steering torque and the gradient of the assist steering torque received from the DSA module are both abnormal, the number of accumulated anomalies is recorded as 1+1+1-1=2.

The number of accumulated anomalies can be increased or decreased through the EPS module according to the aforementioned control strategies and whether the assist steering torque and the gradient of the assist steering torque received from the DSA module currently is abnormal or normal.

Under the condition that the number of accumulated anomalies is smaller than the predetermined number, according to the situation whether the assist steering torque and the gradient of the assist steering torque received from the DSA module currently is abnormal or normal, different steps can be performed through the EPS module.

If the assist steering torque and the gradient of the assist steering torque are both normal, then the steering wheel torque is superimposed by the assist steering torque received from the DSA module.

If the assist steering torque is normal, but the gradient of the assist steering torque is abnormal, then the torque to be superimposed currently can be deduced with the above-mentioned gradient calculation method according to the preset gradient value and the latest superimposed torque. For example, if the preset gradient value is k=10Nm/S, the torque superimposed on the steering wheel last time through the ESP module is Tₒᵣ₁ = +0.78Nm; the time difference between the assist steering torques received currently and previously is △T=0.2S, and the currently superimposed torque is Tₒᵣ₀=k^{∗} △T + Tₒᵣ₁ =10Nm/S^{∗}0.2S + (+0.78Nm)=+2.78 Nm.

If the assist steering torque is abnormal but the gradient of the assist steering torque is either normal or abnormal, then the steering wheel torque is superimposed by the preset torque, and the superposition direction of the preset torque is consistent with that of the assist steering torque received from the DSA module. The preset torque in the embodiment of this invention can be any proper value determined according to the actual requirements, and is optional; the preset torque can be set to the maximum or the minimum value of the preset torque range. For example, if the preset torque range can be set to -3Nm~+3Nm, wherein the two endpoints -3Nm and +3Nm are included, while the assist steering torque that the EPS module receives from the DSA module is -5Nm, after the EPS module detects that the assist steering torque is abnormal, whatever the gradient of the assist torque is normal or abnormal, the torque of -3Nm can be superimposed on the steering wheel; if the assist steering torque that the EPS module receives from the DSA module is +5Nm, after the EPS module detects that the assist steering torque is abnormal, whatever the gradient of the assist torque is normal or abnormal, the torque of +3Nm can be superimposed on the steering wheel.

Under the condition that the number of accumulated anomalies is smaller than the predetermined number, the torque can be superimposed on the steering wheel according to the aforementioned strategies through the EPS module, so that the auxiliary adjustment of the steering wheel is more linear and stable.

Furthermore, under the condition that the number of accumulated anomalies is smaller than the predetermined number, the EPS module can be kept in the active state, or the EPS module can be transferred to the active state from the ready-for-control state. Wherein, if the EPS module is in the ready-for-control state currently and receives the assist steering torque from the DSA module, it is determined that the number of accumulated anomalies is smaller than the predetermined number, and the EPS can be transferred from the ready-for-control state to the active state.

If it is determined that the current number of accumulated anomalies is equal to the predetermined number after the EPS module receives the assist steering torque from the DSA module, the EPS module may not regulate the steering wheel torque, and the EPS module may be transferred to the permanent failure state from the active state; under such conditions, the EPS module can report errors for the anomaly. The predetermined value in the embodiment of the invention can be set to any proper value according to the actual requirements, and examples are given in the embodiment of the invention by taking the predetermined value as 5.

Table 1 shows a logic for the ESP module to report errors and anomalies in the embodiment; in the anomaly option of Table 1, the value "1" represents anomaly, and the value "0" represents no anomaly; in the error option, the value "0" represents that the errors are not reported, and the value "1" represents that the errors are reported. Through the logic shown in Table 1, it can indicate the robustness requirement of the DSA module function system. It should be understood that Table 1 is used as an example but not a limitation to this invention, and the table of anomalies can be any table with SN unrestricted.

**Table 1**

| SN | 0 | 1 | 2 | 3 | 4 | 5 | 6 | 7 | 8 | 9 | 10 | 11 | 12 |
|---|---|---|---|---|---|---|---|---|---|---|---|---|---|
| Anomaly | 1 | 1 | 1 | 0 | 1 | 0 | 0 | 0 | 1 | 1 | 1 | 1 | 1 |
| Account | 1 | 2 | 3 | 2 | 3 | 2 | 1 | 0 | 1 | 2 | 3 | 4 | 5 |
| Report Errors | 0 | 0 | 0 | 0 | 0 | 0 | 0 | 0 | 0 | 0 | 0 | 0 | 1 |

The auxiliary control system for the vehicle, provided by the embodiment of the invention, has the following advantages: (1) based on the function of the arranged DSA module, an interaction framework between the ESP system and the EPS module is proposed for the first time, and the defect that the interaction function of the ESP and EPS systems is not configured on the current automobile market is overcame; (2) the higher performance and safety requirements of customers for the vehicle performance are met, so that the interaction of vehicle control units is more flexible; the DSA module sends commands to the EPS module to assist the driver in operating the vehicle, and the vehicle driving safety and comfort are improved; (2) the anomaly monitoring logical strategy is set for the EPS module, and the strategy makes up the blank of the current torque monitoring logic; the robustness is extremely high and more reliable; (3) the control logic provided by the embodiment of the invention can be applied to more common special working conditions, such as snowy days in Northeast China or rainy environment in South China, in the scenarios of running on packed snow or wet surfaces and dry asphalt roads; after the DSA module is started, the system can assist the driver in operating the vehicle, and the driver can drive the vehicle at will; (4) the control logic provided by the embodiment of the invention embodies vehicle function development rationality and intelligent design level, and the competitiveness of Chinese vehicles against foreign-brand and joint venture-brand vehicles is improved; the performance level and capability of the Chinese vehicles can be fully shown.

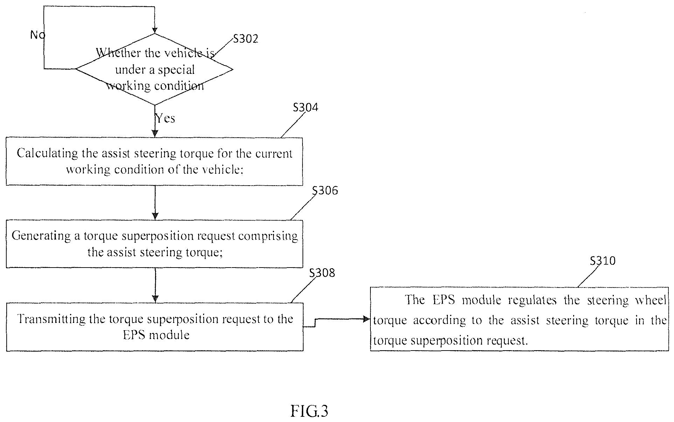

FIG.3 shows a process diagram of the auxiliary control system for the vehicle according to the embodiment of the invention. As shown in FIG.3, the embodiment of the invention further provides an auxiliary control method for vehicles. The method may comprise: the DSA module performs the following steps: S302, detecting whether the vehicle is in a special working condition; S304, calculating the assist steering torque for the current working condition of the vehicle if the vehicle is in a special working condition; S306, generating a torque overlay request comprising the assist steering torque; and S308, sending the torque overlay request to the EPS module; and the EPS module performs S310 (the EPS module regulates the steering wheel torque according to the assist steering torque in the torque overlay request). The steering wheel torque is regulated based on the assist steering torque to assist the driver in operating the vehicle and correcting the dynamic change of the vehicle, so that the vehicle can always be in a stable and controllable state; therefore, the vehicle safety is improved.

The specific working principles and advantages of the auxiliary control method for the vehicle, provided by the embodiment of the invention, are similar to those of the auxiliary control system for the vehicle, provided by the embodiment of the invention, which will not be described in detail here.

The detailed description of the optional implementation modes of the embodiments of the invention is given in combination with the figures, but the embodiments of the invention is not limited to the specific details of the above implementation modes; in the scope of the technical concept of the embodiments of the invention, the technical scheme of the embodiments of the invention can be varied simply; these simple variations all in the protection scope of the embodiments of the invention, as defined in the appended claims.

Those skilled in the art can understand that all or a part of the steps in the above embodiments can be completed by instructing related hardware through a program; the program is stored in a storage medium and comprising a plurality of instructions for enabling a single chip microcomputer, a chip or a processor to execute all or a part of the steps of the method stated in the embodiments of the application. The above-mentioned storage medium comprises a USB disk, a mobile hard disk drive, a Read-Only Memory (ROM), a Random Access Memory (RAM), a disk or a compact disc and other various media which can store program codes.

## Claims

1. An auxiliary control system for vehicles, wherein the system comprises a Dynamic Stability Assistant module (110) and an Electric Power Steering module (120);
the Dynamic Stability Assistant module (110) is configured for performing the following steps: detecting whether the vehicle is in a special working condition; calculating an assist steering torque for a current working condition of the vehicle in the case that the vehicle is in a special working condition; generating a torque overlay request comprising the assist steering torque; and sending the torque overlay request to the Electric Power Steering module (120); and
the Electric Power Steering module (120) is configured for regulating the steering wheel torque according to the assist steering torque in the torque overlay request, **characterized in that**
the Electric Power Steering module (120) regulates the steering wheel torque according to the assist steering torque and a gradient of the assist steering torque, wherein the gradient of the assist steering torque is the difference between the assist steering torque received currently and the assist steering torque received previously divided by the time difference.

2. The system according to claim 1, **characterized in that**
the Dynamic Stability Assistant module (110) is configured for periodically performing the steps of claim 1; and/or
the special working conditions comprise one or more of the following items: oversteer, understeer, braking on split-mu surface, accelerating on split-mu surface, cornering with the lateral acceleration which is higher than a predetermined acceleration.

3. The system, according to claim 1, **characterized in that** the Electric Power Steering module (120) is configured for:
in the case that a number of accumulated anomalies of the assist steering torque and/or the gradient of the assist steering torque is smaller than a predetermined number, performing the following steps: superimposing the assist steering torque on the steering wheel torque if the assist steering torque and the gradient are normal; calculating the current torque to be superimposed according to a preset gradient value and a latest superimposed torque if the assist steering torque is normal and the gradient is abnormal; and superimposing a preset torque on the steering wheel torque if the assist steering torque is abnormal but the gradient is normal or abnormal, wherein a superposition direction of the preset torque is the same as that of the assist steering torque; in the case that the assist steering torque is in a preset torque range, determining that the assist steering torque is normal; in the case that the gradient does not exceed the preset gradient value, determining that the gradient is normal; and
in the case that the number of accumulated anomalies of the assist steering torque and/or the gradient of the assist steering torque is equal to the predetermined number, not superposing the steering wheel torque.

4. The system according to claim 3, **characterized in that** the Electric Power Steering module (120) calculates the number of accumulated anomalies according to the following steps:
if the assist steering torque is abnormal and/or the gradient of the assist steering torque is abnormal, increasing the number of accumulated anomalies by the predetermined value; and
if the assist steering torque and the gradient of the assist steering torque are both abnormal, decreasing the number of accumulated anomalies by the predetermined value;
wherein, when the assist steering torque and/or the gradient of the assist steering torque shows abnormality for the first time, starting to count the number of accumulated anomalies.

5. The system according to claim 3 or 4, **characterized in that** in one or more of the following features:
in the case that the number of accumulated anomalies of the assist steering torque and/or the gradient of the assist steering torque is smaller than the predetermined number, the Electric Power Steering module (120) is kept in the active state, or the Electric Power Steering module (120) is transferred to the active state from the ready-for-control state;
in the case that the number of accumulated anomalies of the assist steering torque and/or the gradient of the assist steering torque is equal to the predetermined number, the Electric Power Steering module (120) is transferred to the permanent failure state from the active state; and
the preset toque is a maximum value or a minimum value of the preset torque range.

6. The system according to claim 1, **characterized in that** the Electric Power Steering module (120) is further configured for outputting its current state to the Dynamic Stability Assistant module (110), and the Dynamic Stability Assistant module (110) is configured to send the torque overlay request to the EPS module in the case that the Electric Power Steering module (120) is in the active state or ready-for-control state.

7. An auxiliary control method for vehicles, wherein the method comprises:
performing the following steps by the Dynamic Stability Assistant module (110): detecting whether the vehicle is in a special working condition; calculating an assist steering torque for a current working condition of the vehicle in the case that the vehicle is in a special working condition; generating a torque overlay request comprising the assist steering torque; sending the torque overlay request to the Electric Power Steering module; and
regulating, by the Electric Power Steering module (120), the torque of the steering wheel according to the assist steering torque in the torque overlay request, **characterized in that**
the Electric Power Steering module (120) regulates the steering wheel torque according to the assist steering torque and a gradient of the assist steering torque, wherein the gradient of the assist steering torque is the difference between the assist steering torque received currently and the assist steering torque received previously divided by the time difference.

8. The method according to claim 7, **characterized in that**
the DSA module is configured for periodically performing the steps of claim 7; and/or
the special working conditions comprise one or more of the following items: oversteer, understeer, braking on split-mu surface, accelerating on split-mu surface, cornering with the lateral acceleration which is higher than a predetermined acceleration.

9. The method according to claim 7, **characterized in that**
in the case that the number of anomalies of the assist steering torque and/or the gradient of the assist steering torque is smaller than a predetermined number, performing the following steps by the Electric Power Steering module (120): superposing superimposing the assist steering torque on the steering wheel torque if the assist steering torque and the gradient are normal; calculating the current torque to be superimposed according to a preset gradient value and a latest superimposed torque if the assist steering torque is normal and the gradient is abnormal; and superimposing a preset torque on the steering wheel torque if the assist steering torque is abnormal but the gradient is normal or abnormal, wherein a superposition direction of the preset torque is the same as that of the assist steering torque; in the case that the assist steering torque is in a preset torque range, determining that the assist steering torque is normal; in the case that the gradient does not exceed the preset gradient value, determining that the gradient is normal; and
in the case that the number of accumulated anomalies of the assist steering torque and/or the gradient of the assist steering torque is equal to the predetermined number, not superposing the steering wheel torque.

10. The method according to claim 9, **characterized in that** the Electric Power Steering module (120) calculates the number of accumulated anomalies according to the following steps:
if the assist steering torque and/or the gradient of the assist steering torque is abnormal, increasing the number of accumulated anomalies by the predetermined value; and
if the assist steering torque and the gradient of the assist steering torque are both abnormal, decreasing the number of accumulated anomalies by the predetermined value;
wherein, when the assist steering torque and/or the gradient of the assist steering torque shows abnormality for the first time, starting to count the number of accumulated anomalies.

11. The method according to claim 9 or 10, **characterized in that** in one or more of the following features:
in the case that the number of accumulated anomalies of the assist steering torque and/or the gradient of the assist steering torque is smaller than the predetermined number, keeping the Electric Power Steering module (120) in the active state, or switching the Electric Power Steering module (120) to the active state from the ready-for-control state;
in the case that the number of accumulated anomalies of the assist steering torque and/or the gradient of the assist steering torque is equal to the predetermined number, switching the Electric Power Steering module (120) to the permanent failure state from the active state; and
the preset toque is a maximum value or a minimum value of the preset torque range.

12. The method according to claim 7, **characterized in that** the method further comprises:
outputting, by the EPS module outputs, a current state of the Electric Power Steering module (120) to the Dynamic Stability Assistant module (110); and
transmitting, by the Dynamic Stability Assistant module (110), the torque overlay request to the Electric Power Steering module (120), in the case that the Electric Power Steering module (120) is in the active state or ready-for-control state.

## Patentansprüche

1. Hilfssteuersystem für Fahrzeuge, wobei das System ein Dynamischer-Stabilitätsassistent-Modul (110) und ein Elektrische-Servolenkung-Modul (120) umfasst;
das Dynamischer-Stabilitätsassistent-Modul (110) so konfiguriert ist, dass es die folgenden Schritte durchführt: Erkennen, ob sich das Fahrzeug in einem speziellen Betriebszustand befindet; Berechnen eines Hilfslenkungsdrehmoments für einen aktuellen Betriebszustand des Fahrzeugs für den Fall, dass sich das Fahrzeug in einem speziellen Betriebszustand befindet; Erzeugen einer Drehmomentüberlagerungsanforderung, die das Hilfslenkungsdrehmoment umfasst; und Senden der Drehmomentüberlagerungsanforderung an das Elektrische-Servolenkung-Modul (120); und
das Elektrische-Servolenkung-Modul (120) so konfiguriert ist, dass es das Lenkraddrehmoment entsprechend dem Hilfslenkungsdrehmoment in der Drehmomentüberlagerungsanforderung regelt, **dadurch gekennzeichnet, dass**
das Elektrische-Servolenkung-Modul (120) das Lenkraddrehmoment gemäß dem Hilfslenkungsdrehmoment und einem Gradienten des Hilfslenkungsdrehmoments regelt, wobei der Gradient des Hilfslenkungsdrehmoments die Differenz zwischen dem aktuell empfangenen Hilfslenkungsdrehmoment und dem zuvor empfangenen Hilfslenkungsdrehmoment geteilt durch die Zeitdifferenz ist.

2. System nach Anspruch 1, **dadurch gekennzeichnet, dass**
das Dynamischer-Stabilitätsassistent-Modul (110) so konfiguriert ist, dass es periodisch die Schritte nach Anspruch 1 durchführt; und/oder
die speziellen Betriebszustände einen oder mehrere der folgenden Punkte umfassen: Übersteuern, Untersteuern, Bremsen auf Split-Mu-Oberfläche, Beschleunigen auf Split-Mu-Oberfläche, Kurvenfahren mit einer seitlichen Beschleunigung, die höher ist als eine vorbestimmte Beschleunigung.

3. System nach Anspruch 1, **dadurch gekennzeichnet, dass** das Elektrische-Servolenkung-Modul (120) konfiguriert ist für:
in dem Fall, dass eine Anzahl von akkumulierten Anomalien des Hilfslenkungsdrehmoments und/oder des Gradienten des Hilfslenkungsdrehmoments kleiner als eine vorbestimmte Anzahl ist, Durchführen der folgenden Schritte: Überlagern des Hilfslenkungsdrehmoments auf das Lenkraddrehmoment, wenn das Hilfslenkungsdrehmoment und der Gradient normal sind; Berechnen des aktuellen, zu überlagernden Drehmoments gemäß einem voreingestellten Gradientenwert und eines letzten überlagerten Drehmoments, wenn das Hilfslenkungsdrehmoment normal und der Gradient anormal ist; und Überlagern eines voreingestellten Drehmoments auf das Lenkraddrehmoment, wenn das Hilfslenkungsdrehmoment anormal ist, aber der Gradient normal oder anormal ist, wobei eine Überlagerungsrichtung des voreingestellten Drehmoments die gleiche ist wie die des Hilfslenkungsdrehmoments; in dem Fall, dass das Hilfslenkungsdrehmoment in einem voreingestellten Drehmomentbereich liegt, Bestimmen, dass das Hilfslenkungsdrehmoment normal ist; in dem Fall, dass der Gradient den voreingestellten Gradientenwert nicht überschreitet, Bestimmen, dass der Gradient normal ist; und
in dem Fall, dass die Anzahl der akkumulierten Anomalien des Hilfslenkungsdrehmoments und/oder der Gradient des Hilfslenkungsdrehmoments gleich der vorbestimmten Anzahl ist, das Lenkraddrehmoment nicht zu überlagern.

4. System nach Anspruch 3, **dadurch gekennzeichnet, dass** das Elektrische-Servolenkung-Modul (120) die Anzahl der akkumulierten Anomalien gemäß den folgenden Schritten berechnet:
wenn das Hilfslenkungsdrehmoment anormal ist und/oder der Gradient des Hilfslenkungsdrehmoments anormal ist, Erhöhen der Anzahl der akkumulierten Anomalien um den vorgegebenen Wert; und
wenn das Hilfslenkungsdrehmoment und der Gradient des Hilfslenkungsdrehmoments beide anormal sind, Verringern der Anzahl der akkumulierten Anomalien um den vorbestimmten Wert;
wobei, wenn das Hilfslenkungsdrehmoment und/oder der Gradient des Hilfslenkungsdrehmoments zum ersten Mal eine Anomalie zeigt, Beginnen mit dem Zählen der Anzahl der akkumulierten Anomalien.

5. System nach Anspruch 3 oder 4, **dadurch gekennzeichnet, dass** es eines oder mehrere der folgenden Merkmale aufweist:
in dem Fall, dass die Anzahl der akkumulierten Anomalien des Hilfslenkungsdrehmoments und/oder der Gradient des Hilfslenkungsdrehmoments kleiner als die vorbestimmte Anzahl ist, wird das Elektrische-Servolenkung-Modul (120) im aktiven Zustand gehalten, oder wird das Elektrische-Servolenkung-Modul (120) aus dem Zustand der Steuerbereitschaft in den aktiven Zustand überführt;
in dem Fall, dass die Anzahl der akkumulierten Anomalien des Hilfslenkungsdrehmoments und/oder der Gradient des Hilfslenkungsdrehmoments gleich der vorbestimmten Anzahl ist, wird das Elektrische-Servolenkung-Modul (120) vom aktiven Zustand in den permanenten Ausfallzustand überführt; und
das voreingestellte Drehmoment ist ein Maximalwert oder ein Minimalwert des voreingestellten Drehmomentbereichs.

6. System nach Anspruch 1, **dadurch gekennzeichnet, dass** das Elektrische-Servolenkung-Modul (120) ferner konfiguriert ist, seinen aktuellen Zustand an das Dynamischer-Stabilitätsassistent-Modul (110) auszugeben, und dass das Dynamischer-Stabilitätsassistent-Modul (110) konfiguriert ist, die Drehmomentüberlagerungsanforderung an das EPS-Modul zu senden, wenn sich das Elektrische-Servolenkung-Modul (120) im aktiven Zustand oder im Zustand der Steuerbereitschaft befindet.

7. Hilfssteuerverfahren für Fahrzeuge, wobei das Verfahren umfasst:
Durchführen der folgenden Schritte durch das Dynamischer-Stabilitätsassistent-Modul (110): Erkennen, ob sich das Fahrzeug in einem speziellen Betriebszustand befindet; Berechnen eines Hilfslenkungsdrehmoments für einen aktuellen Betriebszustand des Fahrzeugs in dem Fall, dass sich das Fahrzeug in einem speziellen Betriebszustand befindet; Erzeugen einer Drehmomentüberlagerungsanforderung, die das Hilfslenkungsdrehmoment umfasst; Senden der Drehmomentüberlagerungsanforderung an das Elektrische-Servolenkung-Modul; und
Regeln des Lenkraddrehmoments durch das Elektrische-Servolenkung-Modul (120) gemäß dem Hilfslenkungsdrehmoment in der Drehmomentüberlagerungsanforderung, **dadurch gekennzeichnet, dass**
das Elektrische-Servolenkung-Modul (120) das Lenkraddrehmoment gemäß dem Hilfslenkungsdrehmoment und einem Gradienten des Hilfslenkungsdrehmoments regelt, wobei der Gradient des Hilfslenkungsdrehmoments die Differenz zwischen dem aktuell empfangenen Hilfslenkungsdrehmoments und dem zuvor empfangenen Hilfslenkungsdrehmoments geteilt durch die Zeitdifferenz ist.

8. Verfahren nach Anspruch 7, **dadurch gekennzeichnet, dass**
das DSA-Modul so konfiguriert ist, dass es periodisch die Schritte nach Anspruch 7 durchführt; und/oder
die speziellen Betriebszustände einen oder mehrere der folgenden Punkte umfassen: Übersteuern, Untersteuern, Bremsen auf Split-Mu-Oberfläche, Beschleunigen auf Split-Mu-Oberfläche, Kurvenfahren mit einer seitlichen Beschleunigung, die höher ist als eine vorbestimmte Beschleunigung.

9. Verfahren nach Anspruch 7, **dadurch gekennzeichnet, dass**
in dem Fall, dass die Anzahl der Anomalien des Hilfslenkungsdrehmoments und/oder des Gradienten des Hilfslenkungsdrehmoments kleiner als eine vorbestimmte Anzahl ist, Durchführen der folgenden Schritte durch das Elektrische-Servolenkung-Modul (120): Überlagern des Hilfslenkungsdrehmoments auf das Lenkraddrehmoment, wenn das Hilfslenkungsdrehmoment und der Gradient normal sind; Berechnen des aktuellen, zu überlagernden Drehmoments gemäß einem voreingestellten Gradientenwert und eines letzten überlagerten Drehmoments, wenn das Hilfslenkungsdrehmoment normal und der Gradient anormal ist; und Überlagern eines voreingestellten Drehmoments auf das Lenkraddrehmoment, wenn das Hilfslenkungsdrehmoment anormal ist, aber der Gradient normal oder anormal ist, wobei eine Überlagerungsrichtung des voreingestellten Drehmoments die gleiche ist wie die des Hilfslenkungsdrehmoments; in dem Fall, dass das Hilfslenkungsdrehmoment in einem voreingestellten Drehmomentbereich liegt, Bestimmen, dass das Hilfslenkungsdrehmoment normal ist; in dem Fall, dass der Gradient den voreingestellten Gradientenwert nicht überschreitet, Bestimmen, dass der Gradient normal ist; und
in dem Fall, dass die Anzahl der akkumulierten Anomalien des Hilfslenkungsdrehmoments und/oder der Gradient des Hilfslenkungsdrehmoments gleich der vorbestimmten Anzahl ist, das Lenkraddrehmoment nicht zu überlagern.

10. Verfahren nach Anspruch 9, **dadurch gekennzeichnet, dass** das Elektrische-Servolenkung-Modul (120) die Anzahl der akkumulierten Anomalien gemäß den folgenden Schritten berechnet:
wenn das Hilfslenkungsdrehmoment und/oder der Gradient des Hilfslenkungsdrehmoments anormal ist, Erhöhen der Anzahl der akkumulierten Anomalien um den vorbestimmten Wert; und
wenn das Hilfslenkungsdrehmoment und der Gradient des Hilfslenkungsdrehmoments beide anormal sind, Verringern der Anzahl der akkumulierten Anomalien um den vorbestimmten Wert;
wobei, wenn das Hilfslenkungsdrehmoment und/oder der Gradient des Hilfslenkungsdrehmoments zum ersten Mal eine Anomalie zeigt, Beginnen mit dem Zählen der Anzahl der akkumulierten Anomalien.

11. Verfahren nach Anspruch 9 oder 10, **dadurch gekennzeichnet, dass** in einem oder mehreren der folgenden Merkmale:
in dem Fall, dass die Anzahl der akkumulierten Anomalien des Hilfslenkungsdrehmoments und/oder der Gradient des Hilfslenkungsdrehmoments kleiner als die vorbestimmte Anzahl ist, Halten des Elektrische-Servolenkung-Moduls (120) im aktiven Zustand oder Umschalten des Elektrische-Servolenkung-Moduls (120) aus dem Zustand der Steuerbereitschaft in den aktiven Zustand;
in dem Fall, dass die Anzahl der akkumulierten Anomalien des Hilfslenkungsdrehmoments und/oder der Gradient des Hilfslenkungsdrehmoments gleich der vorbestimmten Anzahl ist, Umschalten des Elektrische-Servolenkung-Moduls (120) vom aktiven Zustand in den permanenten Ausfallzustand; und
das voreingestellte Drehmoment ist ein Maximalwert oder ein Minimalwert des voreingestellten Drehmomentbereichs.

12. Verfahren nach Anspruch 7, **dadurch gekennzeichnet, dass** das Verfahren ferner umfasst:
Ausgeben eines aktuellen Zustands des Elektrische-Servolenkung-Moduls (120) durch die Ausgänge des EPS-Moduls an das Dynamischer-Stabilitätsassistent-Modul (110); und
Übertragen der Drehmomentüberlagerungsanforderung durch das Dynamischer-Stabilitätsassistent-Modul (110) an das Elektrische-Servolenkung-Modul (120), wenn sich das Elektrische-Servolenkung-Modul (120) im aktiven Zustand oder im Zustand der Steuerbereitschaft befindet.

## Revendications

1. Système de commande auxiliaire pour véhicules, dans lequel le système comprend un module d'assistance en termes de stabilité dynamique ou DSA (110) et un module de direction à alimentation électrique ou EPS (120) ;
le module d'assistance en termes de stabilité dynamique (110) est configuré pour réaliser les étapes qui suivent : la détection de si le véhicule est dans une condition de fonctionnement spéciale ; le calcul d'un couple de direction assistée pour une condition de fonctionnement courante du véhicule dans le cas où le véhicule est dans une condition de fonctionnement spéciale ; la génération d'une requête de superposition de couples qui comprend le couple de direction assistée ; et l'envoi de la requête de superposition de couples sur le module de direction à alimentation électrique (120) ; et
le module de direction à alimentation électrique (120) est configuré pour réguler le couple de volant de direction conformément au couple de direction assistée dans la requête de superposition de couples ;
**caractérisé en ce que** :
le module de direction à alimentation électrique (120) régule le couple de volant de direction conformément au couple de direction assistée et à un gradient du couple de direction assistée, dans lequel le gradient du couple de direction assistée est la différence entre le couple de direction assistée qui est reçu présentement et le couple de direction assistée qui a été reçu au préalable divisée par la différence de temps.

2. Système selon la revendication 1, **caractérisé en ce que** :
le module d'assistance en termes de stabilité dynamique (110) est configuré pour réaliser périodiquement les étapes de la revendication 1 ; et/ou
les conditions de fonctionnement spéciales comprennent une ou plusieurs des situations qui suivent : le survirage, le sous-virage, le freinage sur une surface qui présente un coefficient de frottement mu fractionné, l'accélération sur une surface qui présente un coefficient de frottement mu fractionné, et le virage dans le cas où l'accélération latérale est supérieure à une accélération prédéterminée.

3. Système selon la revendication 1, **caractérisé en ce que** le module de direction à alimentation électrique (120) est configuré pour :
dans le cas où un nombre d'anomalies cumulées du couple de direction assistée et/ou du gradient du couple de direction assistée est inférieur à un nombre prédéterminé, la réalisation des étapes qui suivent : la superposition du couple de direction assistée sur le couple de volant de direction si le couple de direction assistée et le gradient sont normaux ; le calcul du couple courant qui doit être superposé conformément à une valeur de gradient prédéfinie et à un couple superposé en dernier si le couple de direction assistée est normal et que le gradient est anormal ; et la superposition d'un couple prédéfini sur le couple de volant de direction si le couple de direction assistée est anormal mais que le gradient est normal ou anormal ; dans lequel une direction de superposition du couple prédéfini est la même que celle du couple de direction assistée ; dans le cas où le couple de direction assistée est à l'intérieur d'une plage de couples prédéfinie, la détermination du fait que le couple de direction assistée est normal ; et dans le cas où le gradient n'excède pas la valeur de gradient prédéfinie, la détermination du fait que le gradient est normal ; et
dans le cas où le nombre d'anomalies cumulées du couple de direction assistée et/ou du gradient du couple de direction assistée est égal au nombre prédéterminé, la non superposition du couple de volant de direction.

4. Système selon la revendication 3, **caractérisé en ce que** le module de direction à alimentation électrique (120) calcule le nombre d'anomalies cumulées conformément aux étapes qui suivent :
si le couple de direction assistée est anormal et/ou si le gradient du couple de direction assistée est anormal, l'augmentation du nombre d'anomalies cumulées de la valeur prédéterminée ; et
si le couple de direction assistée et le gradient du couple de direction assistée sont tous deux anormaux, la diminution du nombre d'anomalies cumulées de la valeur prédéterminée ;
dans lequel, lorsque le couple de direction assistée et/ou le gradient du couple de direction assistée présente(nt) une anomalie pour la première fois, le démarrage du comptage du nombre d'anomalies cumulées.

5. Système selon la revendication 3 ou 4, **caractérisé par** une ou plusieurs des caractéristiques qui suivent :
dans le cas où le nombre d'anomalies cumulées du couple de direction assistée et/ou du gradient du couple de direction assistée est inférieur au nombre prédéterminé, le module de direction à alimentation électrique (120) est maintenu dans l'état actif, ou le module de direction à alimentation électrique (120) est passé dans l'état actif depuis l'état prêt pour la commande ;
dans le cas où le nombre d'anomalies cumulées du couple de direction assistée et/ou du gradient du couple de direction assistée est égal au nombre prédéterminé, le module de direction à alimentation électrique (120) est passé dans l'état de défaillance permanente depuis l'état actif ; et
le couple prédéfini est une valeur maximum ou une valeur minimum de la plage de couples prédéfinie.

6. Système selon la revendication 1, **caractérisé en ce que** le module de direction à alimentation électrique (120) est en outre configuré pour émettre en sortie son état courant sur le module d'assistance en termes de stabilité dynamique (110), et le module d'assistance en termes de stabilité dynamique (110) est configuré pour envoyer la requête de superposition de couples sur le module EPS dans le cas où le module de direction à alimentation électrique (120) est dans l'état actif ou dans l'état prêt pour la commande.

7. Procédé de commande auxiliaire pour véhicules, dans lequel le procédé comprend :
la réalisation des étapes qui suivent par le module d'assistance en termes de stabilité dynamique ou DSA (110) : la détection de si le véhicule est dans une condition de fonctionnement spéciale ; le calcul d'un couple de direction assistée pour une condition de fonctionnement courante du véhicule dans le cas où le véhicule est dans une condition de fonctionnement spéciale ; la génération d'une requête de superposition de couples qui comprend le couple de direction assistée ; et l'envoi de la requête de superposition de couples sur le module de direction à alimentation électrique ; et
la régulation, par le module de direction à alimentation électrique ou EPS (120), du couple du volant de direction conformément au couple de direction assistée dans la requête de superposition de couples ;
**caractérisé en ce que** :
le module de direction à alimentation électrique (120) régule le couple de volant de direction conformément au couple de direction assistée et à un gradient du couple de direction assistée, dans lequel le gradient du couple de direction assistée est la différence entre le couple de direction assistée qui est reçu présentement et le couple de direction assistée qui a été reçu au préalable divisée par la différence de temps.

8. Procédé selon la revendication 7, **caractérisé en ce que** :
le module DSA est configuré pour réaliser périodiquement les étapes de la revendication 7 ; et/ou
les conditions de fonctionnement spéciales comprennent une ou plusieurs des situations qui suivent : le survirage, le sous-virage, le freinage sur une surface qui présente un coefficient de frottement mu fractionné, l'accélération sur une surface qui présente un coefficient de frottement mu fractionné, le virage dans le cas où l'accélération latérale est supérieure à une accélération prédéterminée.

9. Procédé selon la revendication 7, **caractérisé en ce que** :
dans le cas où le nombre d'anomalies cumulées du couple de direction assistée et/ou du gradient du couple de direction assistée est inférieur à un nombre prédéterminé, la réalisation des étapes qui suivent par le module de direction à alimentation électrique (120) : la superposition du couple de direction assistée sur le couple de volant de direction si le couple de direction assistée et le gradient sont normaux ; le calcul du couple courant qui doit être superposé conformément à une valeur de gradient prédéfinie et à un couple superposé en dernier si le couple de direction assistée est normal et que le gradient est anormal ; et la superposition d'un couple prédéfini sur le couple de volant de direction si le couple de direction assistée est anormal mais que le gradient est normal ou anormal ; dans lequel une direction de superposition du couple prédéfini est la même que celle du couple de direction assistée ; dans le cas où le couple de direction assistée est à l'intérieur d'une plage de couples prédéfinie, la détermination du fait que le couple de direction assistée est normal ; et dans le cas où le gradient n'excède pas la valeur de gradient prédéfinie, la détermination du fait que le gradient est normal ; et
dans le cas où le nombre d'anomalies cumulées du couple de direction assistée et/ou du gradient du couple de direction assistée est égal au nombre prédéterminé, la non superposition du couple de volant de direction.

10. Procédé selon la revendication 9, **caractérisé en ce que** le module de direction à alimentation électrique (120) calcule le nombre d'anomalies cumulées conformément aux étapes qui suivent :
si le couple de direction assistée est anormal et/ou si le gradient du couple de direction assistée est anormal, l'augmentation du nombre d'anomalies cumulées de la valeur prédéterminée ; et
si le couple de direction assistée et le gradient du couple de direction assistée sont tous deux anormaux, la diminution du nombre d'anomalies cumulées de la valeur prédéterminée ;
dans lequel, lorsque le couple de direction assistée et/ou le gradient du couple de direction assistée présente(nt) une anomalie pour la première fois, le démarrage du comptage du nombre d'anomalies cumulées.

11. Procédé selon la revendication 9 ou 10, **caractérisé par** une ou plusieurs des caractéristiques qui suivent :
dans le cas où le nombre d'anomalies cumulées du couple de direction assistée et/ou du gradient du couple de direction assistée est inférieur au nombre prédéterminé, le maintien du module de direction à alimentation électrique (120) dans l'état actif, ou la commutation du module de direction à alimentation électrique (120) dans l'état actif depuis l'état prêt pour la commande ;
dans le cas où le nombre d'anomalies cumulées du couple de direction assistée et/ou du gradient du couple de direction assistée est égal au nombre prédéterminé, la commutation du module de direction à alimentation électrique (120) dans l'état de défaillance permanente depuis l'état actif ; et
le couple prédéfini est une valeur maximum ou une valeur minimum de la plage de couples prédéfinie.

12. Procédé selon la revendication 7, **caractérisé en ce que** le procédé comprend en outre :
l'émission en sortie, par le module EPS, d'un état courant du module de direction à alimentation électrique (120) sur le module d'assistance en termes de stabilité dynamique (110) ; et
la transmission, par le module d'assistance en termes de stabilité dynamique (110), de la requête de superposition de couples au module de direction à alimentation électrique (120), dans le cas où le module de direction à alimentation électrique (120) est dans l'état actif ou dans l'état prêt pour la commande.
